# EUROPÄISCHE PATENTSCHRIFT

(11) **EP 1 196 232 B1**
(45) Veröffentlichungstag und Bekanntmachung des Hinweises auf die Patenterteilung: **08.01.2003**
(21) Anmeldenummer: 00931252.1
(22) Anmeldetag: 22.05.2000
(51) Int. Cl.: B01D 46/52

(54) **PARTIKELFILTER AUS METALLFOLIE**
PARTICLE FILTER MADE OF METAL FOIL
FILTRE A PARTICULES CONSTITUE D'UNE FEUILLE METALLIQUE

(30) Priorität: 28.05.1999 DE 19924584
(43) Veröffentlichungstag der Anmeldung: 17.04.2002
(73) Patentinhaber: Emitec Gesellschaft für Emissionstechnologie mbH, 53797 Lohmar (DE)
(72) Erfinder: MAUS, Wolfgang, D-51429 Bergisch Gladbach (DE)
(74) Vertreter: Kahlhöfer, Hermann, Dipl.-Phys.
(86) Internationale Anmeldenummer: EP0004640
(87) Internationale Veröffentlichungsnummer: WO00072944

(56) Entgegenhaltungen:
- DE-A- 19 704 147
- DE-U- 29 821 009
- US-A- 4 363 753
- US-A- 5 512 075

## Beschreibung

Die vorliegende Erfindung betrifft einen Partikelfilter aus Metallfolie, der für ein Fluid durchströmbare Kanäle aufweist, die nebeneinander angeordnet sind. Jeder Kanal hat zumindest einen Einlaß und einen Auslaß. Weiterhin weist der Partikelfilter einen ersten und einen dazu benachbarten zweiten Kanal auf, wobei der erste Kanal einen offenen Eingangsquerschnitt an einer ersten Stirnseite des Partikelfilters aufweist. Auch wird ein Verfahren zur Herstellung eines Partikelfilters geschaffen.

Aus der EP 0 134 002 geht ein Dieselabgasfilter aus Drahtgewebe sowie ein Verfahren zu dessen Herstellung hervor. Dieser Dieselabgasfilter ist aus Lagen aufgebaut, die zu einem Paket geschichtet oder spiralig geformt werden können. Eine Lage ist aus einem gewellten oder gefalteten Siebgewebe und einer ebenen, geschlossenen oder durchbrochenen Decklage bestehend. Die beiden Stirnflächen des Dieselabgasfilters sind so ausgebildet, daß ein verschlossener Stirnflächenabschnitt einem offenen Stirnflächenabschnitt gegenüberliegt, wobei ein Stirnflächenabschnitt durch Quetschung verschlossen wird. Die gewellte oder gefaltete Lage wird dazu in Falten gegen die ebene Lage gedrückt.

Die DE-U-298 21 009 betrifft ein Partikelfilter, das aus entlang von Faltlinien gefalteten, gelochten Folien besteht, die mit dazwischenliegenden, ebenen Folien abwechseln.

Aufgabe der vorliegenden Erfindung ist es, einen Partikelfilter und ein Verfahren zur Herstellung eines Partikelfilters zu schaffen, die eine vereinfachte Herstellung des Partikelfilters erlauben, wobei gleichzeitig aber auch eine große Oberfläche im Partikelfilter erzielt wird.

Diese Aufgabe wird mit einem Partikelfilter aus Metallfolie mit den Merkmalen des Anspruchs 1 sowie mit einem Verfahren mit den Merkmalen des Anspruches 14 gelöst. Vorteilhafte Weiterbildungen und Merkmale sind in den jeweils abhängigen Ansprüchen angegeben.

Ein Partikelfilter aus Metallfolie, der für ein Fluid durchströmbare Kanäle aufweist, die nebeneinander angeordnet sind, wobei jeder Kanal zumindest einen Einlaß und einen Auslaß hat, mit einem ersten und einen dazu benachbarten zweiten Kanal, wobei der erste Kanal einen offenen Eingangsquerschnitt an einer ersten Stirnseite des Partikels aufweist, der sich zumindest teilweise in den ersten Kanal hineinerstreckt, wobei der erste Kanal dem Eintrittsquerschnitt gegenüber angeordnet zu einer zweiten Stirnseite hin einen Abschluß aufweist, zeichnet sich dadurch aus, daß
- der Abschluß den ersten Kanal für das durchströmbare Fluid zumindest weitgehendst verschließt,
- zumindest eine den ersten Kanal bildende Wand Perforationen als Filterdurchlässe zum zweiten Kanal hat,
- der zweite Kanal einen, dem Eingangsquerschnitt entsprechenden offenen Ausgangsquerschnitt hat und
- die Wände des ersten und des zweiten Kanals aus Metallfolie sind und die Filterdurchlässe den einzigen Eingang zum zweiten Kanal bilden.

Dadurch, daß die Wände des ersten und zweiten Kanals aus Metallfolie sind, weisen diese jeweils eine große Oberfläche auf, die mit dem Fluid in Kontakt tritt. Während bei Verwendung eines Drahtgewebes allein die einzelnen Filamente des Gewebes als Oberfläche zur Verfügung gestellt werden, hat eine die den ersten Kanal mitbildende Wand eine bis auf die Perforationen geschlossene Oberfläche. Die Perforationen als Filterdurchlässe zum benachbarten zweiten Kanal haben wiederum eine Oberfläche, mit dem das Fluid in Kontakt treten kann. Gegenüber einem Drahtgewebe hat daher eine derartige perforierte Wand somit eine größere Oberfläche, die beispielsweise entweder bei entsprechender Beschichtung oder aber bei entsprechender Auswahl des Materials der Metallfolie auch eine größere wirkende Oberfläche hat. Dieses ist für katalytische oder andere Reaktionen bzw. Einsatzmöglichkeiten eines derartigen Partikelfilters ausnutzbar.

Dieser Vorteil einer großen Oberfläche verbindet sich mit dem Vorteil, einen derartigen Partikelfilter in wenigen Arbeitsschritten herstellen zu können. Die notwendigen Perforationen sind beispielsweise in der Metallfolie vorgefertigt. Die entsprechende Formgebung zur Bildung der einzelnen Kanäle wird vorteilhafterweise in einem einzigen Arbeitsschritt vollzogen, unabhängig davon, ob die Metallfolie Perforationen aufweist oder nicht. Beispielsweise ist es vorteilhaft, wenn sämtliche die Kanäle ausbildenden Wände Perforationen aufweisen, so daß bei der Herstellung die Metallfolien oder die Metallfolie unabhängig von ihrer Lage und Ausrichtung verarbeitet werden können.

Weiterhin ermöglicht eine Perforation von Metallfolie, daß eine genaue Lage der Filterdurchlässe im späteren Partikelfilter erzielbar ist. Während Drahtgewebe bei der Verarbeitung dem Risiko unterliegt, das Filamente sich verschieben, ist dieses bei Perforationen in der Metallfolie nicht möglich. Auch ermöglicht diese Art der Filterdurchlässe, daß die Dichte der Perforationen über die Metallfolie und damit die zu bildende Kanalwand variiert werden, ebenso wie ein Durchmesser einer derartigen Perforation. Dieses ist insbesondere anwendbar, wenn verschiedene Filterstufen im Partikelfilter gebildet werden sollen.

Zur Vermeidung eines hohen Druckverlustes über den Partikelfilter hat der zweite Kanal einen, dem Eingangsquerschnitt entsprechenden offenen Ausgangsquerschnitt. Dadurch gelingt es, daß der Druckverlust in etwa proportional zur Anzahl und Dimensionierung der Perforationen einstellbar ist. Gemäß einer vorteilhaften Weiterbildung hat der Partikelfilter den Abschluß des ersten Kanals so ausgebildet, daß dieser kein Fluid durchläßt. Die Filterdurchlässe bilden dann den einzigen Eingang zum zweiten Kanal. Der Abschluß des ersten Kanals dient als Staumauer, so daß das Fluid durch die Filterdurchlässe gedrückt wird. An den Filterdurchlässen sich ansammelnde Partikel, mit denen der Fluidstrom beladen ist, werden dann im Bereich des Abschlusses gesammelt. Dies ist beispielsweise dadurch unterstützbar, daß im Bereich des Abschlusses eine Art Reuse vorhanden ist. Aufgrund der Strömungsausbildung im Bereich des Abschlusses kann ein dort entstehendes Staugebiet des Fluides so genutzt werden, daß Partikel zwar dorthin gelangen, anschließend aber dort sich ablagern. Dadurch bleiben die Filterdurchlässe frei und der Partikelfilter bedarf weniger Regenerationszyklen. Für die Regeneration kann der Partikelfilter insbesondere im Bereich des Abschlusses entsprechende Regenerierungsmittel wie beispielsweise elektrische Beheizung, katalytische Beschichtung oder ähnliches aufweisen.

Zur Vereinfachung der Fertigung des Partikelfilters haben der erste Kanal und der zweite Kanal die gleiche Form, sind aber gegensinnig zueinander angeordnet. Dieses erfordert nur ein Herstellungswerkzeug für eine Metallfolie, wobei bei einem schichtartig aufgebauten Partikelfilter sämtliche Metallfolien zuerst die Fertigung in einer Richtung durchlaufen können und erst anschließend abwechselnd gegensinnig zueinander verdreht werden. Vorteilhafterweise bilden die ersten und die zweiten Kanäle auch einen Wabenkörper, der vorzugsweise auf diese Weise herstellbar ist, wobei erste und zweite Kanäle sich abwechseln.

Gemäß einer vorteilhaften Weiterbildung sind die Wände des ersten und des zweiten Kanals aus einer einzigen Metallfolie geformt. Dieses ermöglicht, von einer Metallfolienrolle die Metallfolie abzurollen, anschließend einer gewünschten Perforierung zu unterziehen sowie in der sich anschließenden Verarbeitungsstation der Metallfolie eine gewünschte Formgebung aufzuprägen. Die Metallfolie kann anschließend entweder aufgewickelt oder geschichtet zum Partikelfilter gebildet werde. Erst zu diesem Arbeitsschritt ist ein Abschneiden der Metallfolie von der Metallfolienrolle notwendig. Der derartig geschichtete oder gewickelte Partikelfilter weist an den Berührungsstellen der einzelnen Wände zueinander Verbindungen auf, beispielsweise durch Hartlöten.

Vorzugsweise wird eine Metallfolie verwendet, die eine Beschichtung aufweist, bevor sie verarbeitet wird. Diese Beschichtung kann einerseits katalytischer Art sein, wodurch wiederum die Oberfläche des Partikelfilters aufgrund der Beschichtung erheblich vergrößert wird. Zum anderen kann die Beschichtung aber auch aus einem Verbindungsmittel wie beispielsweise Lot bestehen, um aneinanderliegende Wände des Partikelfilters miteinander zu verbinden. Dazu wird beispielsweise das Verbindungsmittel streifenweise auf die Metallfolie während oder vor der Verarbeitung zum Partikelfilter aufgetragen. Das Verbindungsmittel ist beispielsweise auch auf einer entsprechenden Beschichtung der Metallfolie auftragbar.

Zur Vergrößerung der Oberfläche des Partikelfilters hat es sich weiterhin als vorteilhaft erwiesen, wenn der erste und/oder zweite Kanal einen sich verjüngenden Querschnitt hat. Dieser ist vorzugsweise keilförmig. Für den ersten Kanal dient der sich verjüngende Querschnitt als Einlauf und vermindert dadurch den Druckverlust des anströmenden Fluides. Weiterhin wird die aktive, mit Fluid beaufschlagte Oberfläche vergrößert, da die Anströmung der Oberfläche schräg erfolgt. Zugleich ermöglicht diese, daß sich an einem Filterdurchlaß angesammelte Partikel durch das auf die Partikel zuströmende Fluid quasi abgespült werden. Dadurch werden die herauszufiltemden Partikel in den Bereich des Abschlusses des ersten Kanals fortbewegt. Unterstützt wird diese Bewegung der Partikel dadurch, daß gegenüberliegende Wände des Metallfilters jeweils Perforationen aufweisen. Entlang dieser Wände entsteht dadurch eine Strömungsschicht, entlang der das Fluid in Bewegung bleibt. Aufgrund von Verwirbelungen, die im mittleren Bereich eines derartigen Kanales entstehen, werden die Partikel über die Kanallänge weiter fort in den Bereich des Abschlusses des Kanals getragen, wo sie sich ablagern können.

Ein weiterer wichtiger Parameter eines Partikelfilters ist der Druckverlust, den er bewirkt. Damit eine Ausbildung einer großen Oberfläche verbunden mit einer gleichzeitig hohen Filterwirkung aber ohne einen hohen Druckverlust ermöglicht wird, haben Versuche gezeigt, daß es zweckmäßig ist, den Durchmesser der Filterdurchlässe anzupassen. Als vorteilhaft hat es sich erwiesen, wenn der Filterdurchlaß ein Loch in der Metallfolie ist mit einer Größe zwischen 3 bis 25 µm, vorzugsweise 5µm. Bei einem derartigen Durchmesser gelingt es, diese ansonsten gegensinnig wirkenden Parameter zu optimieren. Unterstützt wird dieses dadurch, wenn der Partikelfilter etwa zwischen 80.000 und 120.000 Filterdurchlässe je m² Wand aufweist. Der Quadratmeter Wand ist dabei so definiert, daß er von dem durchströmbaren Fluid anströmbar ist.

Da der Partikelfilter insbesondere bei Einsatz in Kraftfahrzeugen hohen Temperaturen ausgesetzt ist, ist es notwendig, daß dieser temperaturstabil wie aber auch stabil gegenüber mechanischen Schwingungen ist. Derartiges ist erzielbar mit einer Metallfolie, die es gestattet, eine Wand mit Filterdurchlässen zu fertigen, deren Dicke zwischen 20 µm und 65 µm liegt, vorzugsweise zwischen 30 µm und 40 µm. Insbesondere der Bereich zwischen 30 µm und 40 µm Dicke der Wand erlaubt zum einen eine Fertigung der Kanäle ohne hohen Aufwand bei Erzielung eines besonders leichten Partikelfilters, der aber dennoch über eine ausreichende Stabilität wie auch Beständigkeit im Betrieb verfügt.

Auch hat es sich als vorteilhaft erwiesen, wenn eine Beschichtung des Partikelfilters nach Fertigung der Kanäle aufgebracht worden ist.

Weiterhin wird ein Verfahren zur Herstellung eines Partikelfilters aus Metallfolie geschaffen, mit dem insbesondere ein Partikelfilter wie oben beschrieben herstellbar ist. Das Verfahren weist die folgenden Schritten auf:
- Abziehen von Metallfolie aus zumindest einem Endlosspeicher,
- Auftragen von Verbindungsmittel, insbesondere in Streifenform,
- Formgebung für spätere Kanäle in die Metallfolie,
- Aufwickeln oder Stapeln der Metallfolie, so daß gegensinnig angeordnete erste und zweite Kanäle gebildet werden, wobei der erste Kanal einen offenen Eingangsquerschnitt an einer ersten Stirnseite des Partikels aufweist, der sich zumindest teilweise in den ersten Kanal hineinerstreckt, wobei der erste Kanal dem Eintrittsquerschnitt gegenüber angeordnet zu einer zweiten Stirnseite hin einen Abschluß aufweist,
und
- dauerhaftes Verbinden von aneinander liegenden Berührungsflächen der Kanäle, so daß ein Partikelfilter allein aus Metallfolie entsteht.

Gemäß einer vorteilhaften Weiterbildung wird das Verfahren dadurch erweitert, daß eine Beschichtung der Metallfolie vor oder nach obigen Schritten erfolgt. Eine weitere Ausgestaltung des Verfahrens sieht vor, daß vor oder nach obigen Schritten eine Perforierung der Metallfolie erfolgt.

Weitere vorteilhafte Ausgestaltungen und Weiterbildungen sowie Merkmale der Erfindung werden anhand der nachfolgenden Zeichnung näher erläutert. Dabei zeigen:
Fig. 1 einen Partikelfilter aus Metallfolie, der geschichtet ist,
Fig. 2 einen zweiten Partikelfilter, der aus einer Metallfolie gefertigt ist,
Fig. 3 eine Variation der Perforation in einer Metallfolie eines Partikelfilters und
Fig. 4 eine Fertigungsstraße zur Herstellung eines Partikelfilter aus Metallfolie.

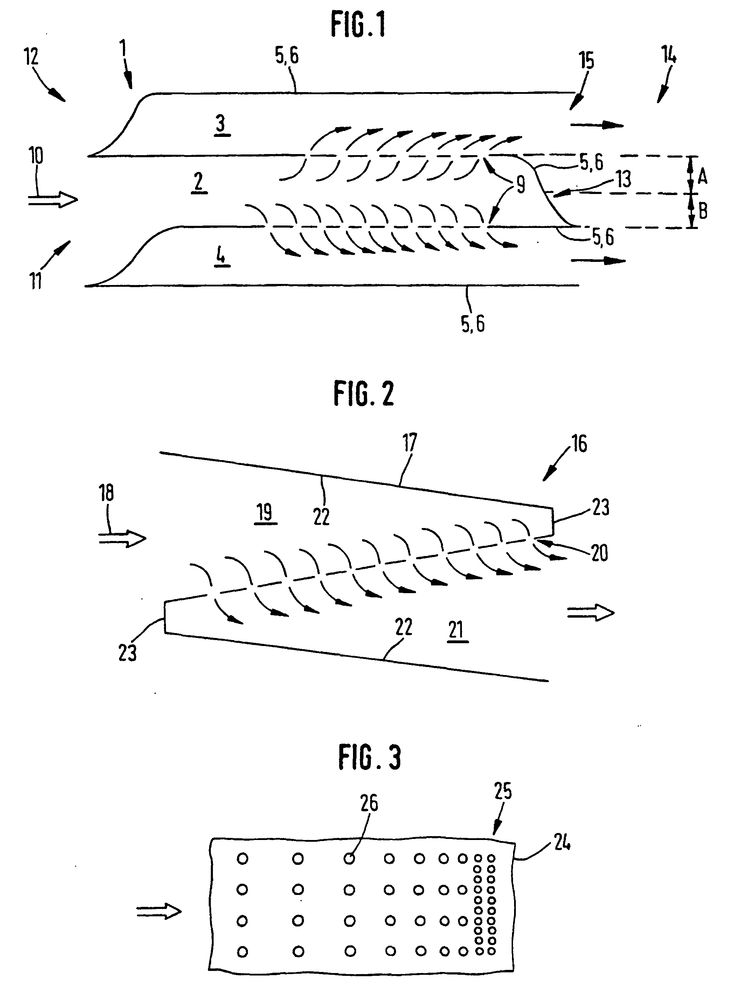

Fig. 1 zeigt einen ersten Partikelfilter 1. Dieser hat einen ersten Kanal 2, einen zweiten Kanal 3 und einen dritten Kanal 4. Er ist aus Metallfolien 5, die übereinander geschichtet sind, aufgebaut. Die Metallfolien 5 bilden Wände 6 der Kanäle 2, 3, 4. Eine erste Wand 7 und eine zweite Wand 8, die den ersten Kanal 2 mitbilden, weisen erste Perforationen 9 als Filterdurchlässe zum zweiten Kanal 3 und dritten Kanal 4 auf. Ein durch den Partikelfilter 1 durchströmendes Fluid 10, angedeutet durch die Pfeile, tritt in einen offenen Eingangsquerschnitt 11 an einer ersten Stirnseite 12 des Partikelfilters 1 ein. Der Eingangsquerschnitt erstreckt sich in den ersten Kanal 2 hinein. Dadurch, daß der erste Kanal 2 dem Eintrittsquerschnitt 11 gegenüber einen Abschluß 13 angeordnet zu einer zweiten Stirnseite 14 hin aufweist, wird das Fluid durch die Perforationen 9 gedrückt. Am Abschluß 13 baut sich nämlich ein Gegendruck auf, der das Fluid 10 in den zweiten Kanal 3 und dritten Kanal 4 zwingt. Der Abschluß 13 hat gemäß der dargestellten Ausführung keine Perforation und ist daher für das durchströmbare Fluid 10 gasdicht verschlossen. Bei einer anderen, hier nicht dargestellten Ausführung weist der Abschluß 13 ebenfalls Perforationen auf. Dieses erlaubt eine Führung des Fluides 10 durch die gesamte Länge des ersten Kanales 2. Gemäß einer weiteren vorteilhaften Ausgestaltung werden Perforationen nur in einem ersten Bereich A des Abschlusses 13 vorgesehen, während in einem zweiten Bereich B des Abschlusses 13 keine Perforationen vorgesehen sind. Dadurch wirkt der zweite Bereich B aufgrund der dort nicht vorhandenen Strömung als Totraum und als Ansammlungsort für im ersten Kanal 2 angesammelte Partikel.

Der zweite Kanal 3 hat einen offenen Ausgangsquerschnitt 15, der dem offenen Eingangsquerschnitt 11 des ersten Kanals 2 entspricht. Die hier dargestellten offenen Eingangsquerschnitte 11 und offener Ausgangsquerschnitt 15 haben den Vorteil, daß sie aufgrund ihrer Verengung bzw. Vergrößerung düsen- bzw. diffusorartig auf das Fluid 10 wirken. Dieses trägt zur Minimierung von Druckverlusten über den ersten Partikelfilter 1 bei. Jedoch kann der Ausgangsquerschnitt 15 auch größer sein als der Eingangsquerschnitt 11, wodurch eine Verlangsamung der Fluidströmung erzielt wird. Ist andererseits eine Erhöhung der Strömungsgeschwindigkeit hinter dem Partikelfilter gewünscht, kann der Ausgangsquerschnitt 15 auch gegenüber dem Eingangsquerschnitt 11 verkleinert sein.

Fig. 2 zeigt einen zweiten Partikelfilter 16. Der zweite Partikelfilter 16 ist aus einer Metallfolie 17 gefertigt. Ein partikelbeladenes zweites Fluid 18 angedeutet, durch den Pfeil, strömt über einen vierten Kanal 19 durch zweite Perforationen 20 in einen fünften Kanal 21. Die Metallfolie 17 ist so gefaltet, daß sie dritte Wände 22 der Kanäle 19, 21 sowie zweite Abschlüsse 23 bildet. Die Kanäle 19, 21 haben einen sich verjüngenden Querschnitt. In dieser bevorzugten Ausgestaltung laufen die Querschnitte keilförmig zu. Auf diese Weise ist über die gesamte Länge eines Kanals ein düsenartiger Effekt erzielbar sowie eine Erhöhung der direkt angeströmten Fläche pro Kanal.

Fig. 3 zeigt einen Ausschnitt 24 aus einer Metallfolie mit einer Variation der dritten Perforationen 25. Über die Länge des Ausschnittes 24 nimmt eine Dichte der Filterdurchlässe 26 zu. Dieses ist erzielbar über eine Änderung der Abstände der Filterdurchlässe 26 wie auch ihrer Anzahl sowie ihrer Durchmesser. So wie dargestellt, wird der Ausschnitt 24 vorteilhafterweise durch ein durch den Pfeil angedeutetes Fluid angeströmt. Im Kanal ergibt sich über die Länge des Ausschnittes 24 eine die gesamte Länge nutzende Überströmung.

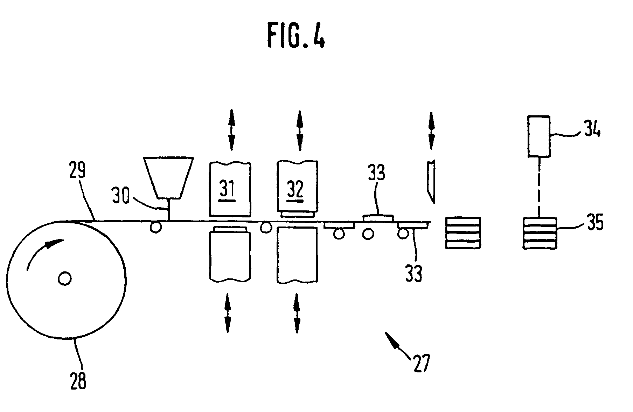

Fig. 4 zeigt eine vorteilhafte Fertigungsstraße 27, mit der ein Verfahren zur Herstellung eines Partikelfilters aus Metallfolie, insbesondere eines Partikelfilters wie beansprucht, durchführbar ist. Dazu wird von einem Endlosspeicher, in diesem Falle einer Rolle Metallfolie 28, eine Metallfolie 29 abgerollt. Im nächsten Arbeitsschritt wird ein Verbindungsmittel 30 auf die Metallfolie 29 aufgetragen. Dieses erfolgt vorteilhafterweise in Streifenform und zwar zweckmäßigerweise entlang derjenigen Bereiche, in denen nachfolgend aufeinanderliegende Fläche sich berühren und miteinander zu verbinden sind. In einem weiteren Schritt erfolgt eine Formgebung für die späteren Kanäle eines Partikelfilters. Dieses wird in der dargestellten Ausführung mittels einer ersten Presse 31 und einer zweiten Presse 32 durchgeführt. Die erste Presse 31 prägt der Metallfolie 28 die gleiche Geometrie ein wie die zweite Presse 32. Diese sind jedoch um 180° jeweils vertauscht. Bei dem nachfolgenden Arbeitsschritt werden die eingeprägten Geometrien 33 von der Metallfolie 29 abgetrennt. Die wechselweise um 180° verschobene Prägung erlaubt, daß die derartig eingeprägten Geometrien fortlaufend übereinandergestapelt werden können. Durch die Stapelung bilden sich erste und zweite Kanäle. Diese haben einerseits die gleiche Form, aber sind andererseits gegensinnig zueinander angeordnet. Anschließend werden in einem nicht dargestellten Arbeitsschritt aneinanderliegende Berührungsflächen dauerhaft miteinander verbunden, beispielsweise mittels Hartlöten, so daß ein Partikelfilter allein aus einer Metallfolie entsteht. Im nächsten Arbeitsschritt der Fertigungsstraße 27 wird eine Perforierung mittels eines Lasers 34 in den Partikelfilter 35 eingebracht. Vorzugsweise wird vor dem Einbringen der Perforierung der Partikelfilter 35 beispielsweise mit einer Katalysatorbeschichtung versehen, was wiederum die Oberfläche des Partikelfilters 35 vergrößert.

### Bezugszeichenliste

- 1: erster Partikelfilter
- 2: erster Kanal
- 3: zweiter Kanal
- 4: dritter Kanal
- 5: Metallfolie
- 6: Wände
- 7: erste Wand
- 8: zweite Wand
- 9: erste Perforation
- 10: Fluid
- 11: offener Eingangsquerschnitt
- 12: erste Stirnseite
- 13: Abschluß
- 14: zweite Stirnseite
- 15: offener Ausgangsquerschnitt
- 16: zweiter Partikelfilter
- 17: Metallfolie
- 18: zweites Fluid
- 19: vierter Kanal
- 20: zweite Perforation
- 21: fünfter Kanal
- 22: dritte Wände
- 23: zweite Abschlüsse
- 24: Ausschnitt
- 25: dritte Perforation
- 26: Filterdurchlaß
- 27: Arbeitsstation
- 28: Endlosspeicher Metallfolie (Rolle)
- 29: Metallfolie
- 30: Verbindungsmittel
- 31: erste Presse
- 32: zweite Presse
- 33: eingeprägte Geometrie
- 34: Laser
- 35: Partikelfilter

## Patentansprüche

1. Partikelfilter (1; 16; 35) aus Metallfolie (5; 17; 29), der für ein Fluid (10; 18) durchströmbare Kanäle (2, 3, 4; 19, 21) aufweist, die nebeneinander angeordnet sind, wobei jeder Kanal (2, 3, 4; 19, 21) zumindest einen Einlaß und einen Auslaß hat, mit einem ersten (2; 19) und einem dazu benachbarten zweiten (3, 4; 21) Kanal, wobei der erste Kanal (2; 19) einen offenen Eingangsquerschnitt (11) an einer ersten Stirnseite (12) des Partikelfilters (1; 16; 35) aufweist, der sich zumindest teilweise in den ersten Kanal (2; 19) hinein erstreckt, wobei der erste Kanal (2; 19) dem Eintrittsquerschnitt (11) gegenüber angeordnet zu einer zweiten Stirnseite (14) hin einen Abschluß (13; 23) aufweist, wobei
- der Abschluß (13; 23) den ersten Kanal (2; 19) für das durchströmbare Fluid (10; 18) zumindest weitgehendst verschließt,
- zumindest eine den ersten Kanal (2; 19) bildende Wand (7, 8) Perforationen (9) als Filterdurchlässe (26) zum zweiten Kanal (3, 4; 21) hat,
- der zweite Kanal (3, 4; 21) einen, zumindest in etwa dem Eingangsquerschnitt (11) entsprechenden offenen Ausgangsquerschnitt (15) hat,
- die Wände (6, 7, 8) des ersten (2; 19) und des zweiten (3, 4; 19) Kanals aus Metallfolie (5; 17; 29) sind und
die Filterdurchlässe (26) den einzigen Eingang zum zweiten Kanal (3, 4; 21) bilden.

2. Partikelfilter (1; 16; 35) nach Anspruch 1, **dadurch gekennzeichnet, daß** der erste Kanal (2; 19) und der zweite Kanal (3, 4; 19) die gleiche Form haben, aber gegensinnig zueinander angeordnet sind.

3. Partikelfilter (1; 16; 35) nach Anspruch 1 oder 2, **dadurch gekennzeichnet, daß** die ersten (2; 19) und zweiten (3, 4; 19) Kanäle sich abwechselnd einen Wabenkörper bilden.

4. Partikelfilter (1; 16; 35) nach einem der vorhergehenden Ansprüche, **dadurch gekennzeichnet, daß** die Wände des ersten (2; 19) und des zweiten (3, 4; 19) Kanals aus einer einzigen Metallfolie (5; 17; 29) geformt sind.

5. Partikelfilter (1; 16; 35) nach einem der vorhergehenden Ansprüche, **dadurch gekennzeichnet, daß** der erste (2; 19) und/oder der zweite (3, 4;19) Kanal einen sich verjüngenden Querschnitt hat.

6. Partikelfilter (1; 16; 35) nach Anspruch 5, **dadurch gekennzeichnet, daß** der sich verjüngende Querschnitt keilförmig ist.

7. Partikelfilter (1; 16; 35) nach einem der vorhergehenden Ansprüche, **dadurch gekennzeichnet, daß** der Filterdurchlaß (26) ein Loch in der Metallfolie (5; 17; 29) ist mit einem Durchmesser zwischen 3 bis 25 µm, vorzugsweise 5 µm.

8. Partikelfilter (1; 16; 35) nach einem der vorhergehenden Ansprüche, **dadurch gekennzeichnet, daß** der Partikelfilter (1; 16; 35) etwa zwischen 80.000 und 120.000 Filterdurchlässe (26) je Quadratmeter Wand (6) aufweist.

9. Partikelfilter (1; 16; 35) nach einem der vorhergehenden Ansprüche, **dadurch gekennzeichnet, daß** eine Wand (3, 4) mit Filterdurchlässen (26) eine Dicke zwischen 20 und 65 µm hat, vorzugsweise zwischen 30 und 40 µm.

10. Partikelfilter (1; 16; 35) nach einem der vorherigen Ansprüche, **dadurch gekennzeichnet, daß** der Partikelfilter (1; 16; 35) eine Beschichtung aufweist.

11. Partikelfilter (1; 16; 35) nach Anspruch 10, **dadurch gekennzeichnet, daß** die Beschichtung nach Fertigung der Kanäle (2, 3, 4) aufgebracht worden ist.

12. Partikelfilter (1; 16; 35) nach einem der vorhergehenden Ansprüche, **dadurch gekennzeichnet, daß** die Perforationen (9) nach Fertigung der Kanäle (2, 3, 4) eingebracht worden sind.

13. Verfahren zur Herstellung eines Partikelfilters (1; 16; 35) aus Metallfolie, insbesondere eines Partikelfilters (1; 16; 35) gemäß des Anspruches 1, mit den folgenden Schritten:
- Abziehen von Metallfolie aus zumindest einem Endlosspeicher (28),
- Auftragen von Verbindungsmittel (30), insbesondere in Streifenform,
- Formgebung für spätere Kanäle in die Metallfolie (29),
- Aufwickeln oder Stapeln der Metallfolie (29), so daß gegensinnig angeordnete erste (2; 19) und zweite Kanäle (3, 4; 21) gebildet werden, wobei der erste Kanal (2;19) einen offenen Eingangsquerschnitt (11) an einer ersten Stirnseite (12) des Partikelfilters (1; 16; 35) aufweist, der sich zumindest teilweise in den ersten Kanal (2; 19) hineinerstreckt, wobei der erste Kanal (2; 19) dem Eintrittsquerschnitt (11) gegenüber angeordnet zu einer zweiten Stirnseite (14) hin einen Abschluß (13; 23) aufweist, und
- dauerhaftes Verbinden von aneinander liegenden Berührungsflächen der Kanäle, so daß ein Partikelfilter (1; 16; 35) allein aus Metallfolie (28) entsteht.

14. Verfahren nach Anspruch 13, **dadurch gekennzeichnet, daß** eine Beschichtung der Metallfolie (28) vor oder nach den Schritten aus Anspruch 13 erfolgt.

15. Verfahren nach Anspruch 13 oder 14, **dadurch gekennzeichnet, daß** vor oder nach den Schritten aus Anspruch 13 oder Anspruch 14 eine Perforierung der Metallfolie (28) erfolgt.

## Claims

1. A particle filter (1; 16; 35) of metal foil (5; 17; 29) having passages (2, 3, 4; 19, 21) through which a fluid (10; 18) can flow and which are arranged in mutually juxtaposed relationship, wherein each passage (2, 3, 4; 19, 21) has at least an inlet and an outlet, with a first passage (2; 19) and a second passage (3, 4; 21) adjacent thereto, wherein the first passage (2; 19) has an open intake cross-section (11) at a first end (12) of the particle filter (1; 16; 35), which extends at least partially into the first passage (2; 19), wherein the first passage (2; 19) has a closure means (13; 23) arranged opposite the intake cross-section (11) towards a second end (14), wherein
- the closure means (13; 23) at least very substantially closes the first passage (2; 19) for the fluid (10; 18) which can flow therethrough,
- at least one wall (7, 8) forming the first passage (2; 19) has perforations (9) as filter openings (26) to the second passage (3, 4; 21),
- the second passage (3, 4; 21) has an open discharge cross-section (15) at least approximately corresponding to the intake cross-section (11),
- the walls (6, 7, 8) of the first passage (2; 19) and the second passage (3, 4; 19) are of metal foil (5; 17; 29), and
the filter openings (26) form the sole intake to the second passage (3, 4; 21).

2. A particle filter (1; 16; 35) according to claim 1 **characterised in that** the first passage (2; 19) and the second passage (3, 4; 19) are of the same shape but are arranged in mutually opposite directions.

3. A particle filter (1; 16; 35) according to claim 1 or claim 2 **characterised in that** the first (2; 19) and second (3, 4; 19) passages alternately form a honeycomb body.

4. A particle filter (1; 16; 35) according to one of the preceding claims **characterised in that** the walls of the first (2; 19) and the second (3, 4; 19) passage are formed from a single metal foil (5; 17; 29).

5. A particle filter (1; 16; 35) according to one of the preceding claims **characterised in that** the first (2; 19) and/or the second (3, 4; 19) passage is of a narrowing cross-section.

6. A particle filter (1; 16; 35) according to claim 5 **characterised in that** the narrowing cross-section is wedge-shaped.

7. A particle filter (1; 16; 35) according to one of the preceding claims **characterised in that** the filter opening (6) is a hole in the metal foil (5; 17; 29) of a diameter of between 3 and 25 µm, preferably 5 µm.

8. A particle filter (1; 16; 35) according to one of the preceding claims **characterised in that** the particle filter (1; 16; 35) has approximately between 80,000 and 120,000 filter openings (26) per square metre of wall (6).

9. A particle filter (1; 16; 35) according to one of the preceding claims **characterised in that** a wall (3, 4) with filter openings (26) is of a thickness of between 20 and 65 µm, preferably between 30 and 40 µm.

10. A particle filter (1; 16; 35) according to one of the preceding claims **characterised in that** the particle filter (1; 16; 35) has a coating.

11. A particle filter (1; 16; 35) according to claim 10 **characterised in that** the coating has been applied after production of the passages (2, 3, 4).

12. A particle filter (1; 16; 35) according to one of the preceding claims **characterised in that** the perforations (9) have been formed after production of the passages (2, 3, 4).

13. A process for the production of a particle filter (1; 16; 35) of metal foil, in particular a particle filter (1; 16; 35) according to claim 1, comprising the following steps:
- drawing off metal foil from at least one endless store (28),
- applying joining agent (30), in particular in strip form,
- shaping for subsequent passages in the metal foil (29),
- winding on or stacking the metal foil (29) so that mutually oppositely arranged first (2; 19) and second (3, 4; 21) passages are formed, wherein the first passage (2; 19) has an open intake cross-section (11) at a first end (12) of the particle filter (1; 16; 35) which extends at least partly into the first passage (2; 19), wherein the first passage (2; 19) has a closure means (13; 23) arranged opposite the intake cross-section (11) towards a second end (14), and
- permanently joining contact surfaces of the passages, which bear against each other, so that a particle filter (1; 16; 35) is formed solely from metal foil (28).

14. A process according to claim 13 **characterised in that** an operation of coating the metal foil (28) is effected prior to or after the steps recited in claim 13.

15. A process according to claim 13 or claim 14 **characterised in that** an operation of perforating the metal foil (28) is effected prior to or after the steps recited in claim 13 or claim 14.

## Revendications

1. Filtre pour particules (1 ; 16 ; 35) de feuille métallique (5 ; 17 ; 29) qui présente des canaux (2, 3, 4; 19, 21) pouvant être parcourus par un fluide (10 ; 18), lesquels canaux (2, 3, 4 ; 19, 21) sont agencés l'un à coté de l'autre, dans quel cas chaque canal (2, 3, 4 ; 19, 21) a au moins une ouverture d'entrée et une ouverture de sortie, avec un premier (2 ; 19) et un deuxième canal (3, 4 ; 21) y étant adjacent, dans quel cas le premier canal (2 ; 19) a une section d'admission ouverte (11) sur une première face frontale (12) du filtre pour particules (1 ; 16 ; 35), laquelle section d'admission ouverte (11) s'étend au moins partiellement dans le premier canal (2 ; 19), le premier canal (2 ; 19) présentant vers une deuxième face frontale (14) une clôture (13; 23) agencée en vis-à-vis de la section d'admission (11), dans quel cas
- la clôture (13; 23) ferme au moins sensiblement le premier canal (2 ; 19) pour le fluide (10 ; 18) pouvant s'écouler,
- au moins une paroi (7, 8) formant le premier canal (2 ; 19) a des perforations (9) en tant qu'ouvertures de filtre (26) vers le deuxième canal (3, 4 ; 21),
- le deuxième canal (3, 4; 21) a une section d'évacuation ouverte (15) qui correspond au moins à peu près à la section d'admission (11),
- les parois (6, 7, 8) du premier (2 ; 19) et du deuxième (3, 4 ; 19) canal sont en feuille métallique (5 ; 17 ; 29) et
- les ouvertures de filtre (26) forment la seule entrée vers le deuxième canal (3, 4 ; 21).

2. Filtre pour particules (1 ; 16 ; 35) selon la revendication 1, **caractérisé en ce que** le premier canal (2 ; 19) et le deuxième canal (3, 4 ; 19) ont la même forme, mais sont agencés en sens opposé l'un à l'autre.

3. Filtre pour particules (1 ; 16 ; 35) selon la revendication 1 ou 2, **caractérisé en ce que** les premiers (2 ; 19) et les deuxièmes (3, 4 ; 19) canaux forment s'alternant un corps en nid d'abeilles.

4. Filtre pour particules (1 ; 16; 35) selon l'une des revendications précédentes, **caractérisé en ce que** les parois du premier (2 ; 19) et du deuxième (3, 4 ; 19) canal sont formées d'une seule feuille métallique (5 ; 17 ; 29).

5. Filtre pour particules (1 ; 16 ; 35) selon l'une des revendications précédentes, **caractérisé en ce que** le premier (2 ; 19) et/ou le deuxième (3, 4 ; 19) canal a une section qui s'amincit.

6. Filtre pour particules (1 ; 16 ; 35) selon la revendication 5, **caractérisé en ce que** la section s'amincissante est cunéiforme.

7. Filtre pour particules (1 ; 16 ; 35) selon l'une des revendications précédentes, **caractérisé en ce que** l'ouverture de filtre (26) est un trou dans la feuille métallique (5 ; 17 ; 29) avec un diamètre entre 3 à 25 µm, de préférence de 5 µm.

8. Filtre pour particules (1; 16; 35) selon l'une des revendications précédentes, **caractérisé en ce que** le filtre pour particules (1; 16 ; 35) présente environ entre 80.000 et 120.000 ouvertures de filtre (26) par mètre quarré de paroi (6).

9. Filtre pour particules (1 ; 16; 35) selon l'une des revendications précédentes, **caractérisé en ce qu'**une paroi (3, 4) avec des ouvertures de filtre (26) a une épaisseur entre 20 et 65 µm, de préférence entre 30 et 40 µm.

10. Filtre pour particules (1 ; 16; 35) selon l'une des revendications précédentes, **caractérisé en ce que** le filtre pour particules (1 ; 16 ; 35) a un revêtement.

11. Filtre pour particules (1 ; 16 ; 35) selon la revendication 10, **caractérisé en ce que** le revêtement a été appliqué après la fabrication des canaux (2, 3, 4).

12. Filtre pour particules (1; 16; 35) selon l'une des revendications précédentes, **caractérisé en ce que** les perforations (9) ont été introduites après la fabrication des canaux (2, 3, 4).

13. Procédé destiné à la fabrication d'un filtre pour particules (1 ; 16 ; 35) de feuille métallique, notamment d'un filtre pour particules (1 ; 16 ; 35) selon la revendication 1 avec les étapes suivantes :
- prélèvement de feuille métallique d'au moins un entrepôt continu (28),
- application d'agent de liaison (30), notamment en forme de bandes,
- façonnage dans la feuille métallique (29) pour des canaux futurs,
- enroulement ou empilement de la feuille métallique (29), de sorte que des premiers (2 ; 19) et des deuxièmes canaux (3, 4; 21), agencés en sens opposé, sont formés, le premier canal (2 ; 19) présentant une section d'admission ouverte (11) sur une première face frontale (12) du filtre pour particules (1 ; 16; 35) laquelle section d'admission ouverte (11) s'étend au moins partiellement dans le premier canal (2 ; 19), le premier canal (2 ; 19) présentant vers une deuxième face frontale (14) une clôture (13 ; 23) agencée en vis-à-vis de la section d'admission (11), et
- liaison permanente de surfaces de contact juxtaposées des canaux, de sorte qu'un filtre pour particules (1; 16; 35) est formé uniquement de feuille métallique.

14. Procédé selon la revendication 13, **caractérisé en ce qu'**un revêtement de la feuille métallique (28) est effectué avant ou après les étapes de la revendication 13.

15. Procédé selon la revendication 13 ou 14, **caractérisé en ce qu'**une perforation de la feuille métallique (28) est effectuée avant ou après les étapes de la revendication 13 ou de la revendication 14.
